# EUROPEAN PATENT SPECIFICATION

(11) **EP 2 414 983 B1**
(45) Date of publication and mention of the grant of the patent: **17.01.2018**
(21) Application number: 10725375.9
(22) Date of filing: 06.04.2010
(51) Int. Cl.: G06F 21/34, G06F 21/62

(54) **Secure Data System**
Sicheres Datensystem
Système de données sécurisées

(30) Priority: 03.04.2009 EP 09157326
(43) Date of publication of application: 08.02.2012
(73) Proprietor: Digidentity B.v., 2521 CA 's-Gravenhage (NL)
(72) Inventor: WENDT, Marcel Armand, NL-2514 BR 's-Gravenhage (NL); DE BIE, Wouter Petrus Maria, NL-2514 BR 's-Gravenhage (NL); MACKENBACH, Carel Maurits, 's-Gravenhage NL-2514 BR (NL)
(74) Representative: De Vries & Metman
(86) International application number: PCT/EP2010/002159
(87) International publication number: WO 2010/115607

(56) References cited:
- US-A1- 2002 178 366
- US-A1- 2005 114 686
- US-A1- 2008 080 718

## Description

### Field of the invention

The invention relates to a secure data system and, in particular, though not exclusively, to a method and a system for securely storing and/or accessing data, a secure data server and computer program product for executing such method.

### Background of the invention

Nowadays the Internet is rapidly developing towards a generally accepted channel for performing transactions between the public and commercial and/or governmental parties. Due to the open and anonymous character of the Internet, at the same time issues around the protection of sensitive information, e.g. transaction information, sent over the Internet and accessible via the Internet are a growing concern amongst the public. Hence, mechanisms should be in place in order to ensure that only the rightful owner has access to and control over the information concerned.

In order to achieve legally valid electronic transactions requirements for data protection are formulated by (inter)governmental organisations, e.g. in the form of data protection legislation and/or recommendations as described e.g. in ETSI document TS 101 456. Appropriate technical measures should be taken against unauthorized or unlawful processing of sensitive (i.e. personal, private, legal and/or commercial data) which are centrally stored at the premises of a third party. Further, the centrally stored data should be protected from disclosure without the user's agreement.

One important mechanism to ensure access to sensitive information is the authentication process, i.e. the process of verifying the identity of a party. Many electronic transactions require the ability to identify the originator of electronic information in the same way that documents are signed using a hand-written signature. This may nowadays be achieved by using a digital electronic certificate issued by a trusted certification authority (CA). The certificate associates a public-private key pair with the identity of the certificate owner. A sender may sign a message by encrypting (part of) a message using his private key and a recipient may verify identity of the sender of a message by decrypting the signed message using the public key of the sender. A further important mechanism to ensure rightful access is the authorization process in order to verify whether - after authentication of the requester - a requester has the right to access and/or modify requested information. Especially in large data access systems where sensitive information is centrally stored a strong authorization process is required.

One problem related to data storage systems is the management of the security information. When performing electronic transactions, parties do not like to be bothered with security issues like the distribution, installation and management of digital certificates. Hence, although the authentication and authorization process should be strong, at the same time it should be simple and easy to handle for a user.

Another problem relates to access of sensitive data which is stored in a central system managed by a third party. Typically such system is configured so that the administrator of the system and parties authorized by the administrator are able to access at least part of the data. Hence, complex and expensive rules have to be in place and guarded to ensure data privacy.

Yet another problem relates to the central storage of sensitive data. Centrally stored data may be an attractive target for hackers or other unauthorized parties trying to compromise the data or gain access to the data and/or use the data for un-authorized purposes. Hence, there is a need in the prior art for an improved secure data storage system.

Document US 2002/178366 A1 discloses a data access server with user-specific areas where data are stored in encrypted form. User authentication involves decrypting the user's private key with a user-provided password, and subsequently using the decrypted private key to perform operations on behalf of the authenticated user.

### Summary of the invention

It is an object of the invention to reduce or eliminate at least one of the drawbacks known in the prior art and to provide in a first aspect of the invention a method for managing one or more personal data storage units for securely and centrally storing private data, wherein each of said personal data units may be connected to a secure data server and wherein each of said personal data units may be associated with a private key encrypted by a subscriber identify code and a personal scrambling key encrypted by a public key. The method may comprises at least one of the steps of: receiving an access request from a client, said request comprising a subscriber identity code associated with a personal data storage unit; authenticating said client by decrypting the private key stored in said personal data storage unit using the subscriber identity code contained in said access request; storing the private key in a secure memory of the secure server, said private key being encrypted with a session key; and/or, transmitting the session key to said client.

The method allows central management of personal data storage units in a secure and efficient way. Access is managed by the secure server using personal security information. The personal security information may comprise private-public key pair (obtained e.g. from a subscriber certificate) which is securely stored in the personal data storage unit. By centrally storing and managing the personal security information no complex certificate distribution scheme is required. After authentication of the subscriber the secure server unlocks the personal security information for data access and/or transaction purposes. Such central scheme is particular advantageous for terminals with limited capacities, e.g. mobile phone or thin client type terminals.

In one embodiment the authentication may further comprises the step of comparing a hash from the private key associated with said personal data unit with the hash of the private key decrypted with the subscriber identity code contained in said access request. The method thus provides a personal data storage unit which may only be unlocked using the subscriber identity code of the subscriber. Hence, unlike a conventional central data storage system, the administrator of the SDS has no access to the data in the personal data storage units. No complex data privacy rules are required to ensure data privacy. Any request for access (i.e. data disclosure) is routed to the subscriber who may or may not authorized the requesting party access (read only) to the data requested.

In another embodiment the authentication may further comprise at least one of the steps of: sending a challenge, preferably in an out-of-band channel, to the subscriber of the personal data storage unit; receiving a response from the subscriber; and/or comparing said response with an expected response stored in the secure data server. The method thus allows simple implementation of multi-factor authentication for strong authentication purposes.

In yet another embodiment the private key and public key may be associated with a subscriber certificate, preferably said certificate having a limited lifetime. In a further variant the lifetime of a certificate may be determined by a predetermined duration of time, a predetermined number of sessions and/or a revocation actions of the CA which issued the certificate.

In one variant the secure sever may comprise a revocation list of one or more revoked and/or subscriber certificates. In another variant the authentication may comprise the step of checking whether the subscriber certificate associated with the subscriber identity code is listed on the revocation list.

In another variant the method may comprise at least one of the steps of: establishing a session, preferably a secure web session, between the client and the secure server; and/or generating a session key associated with said session, said session key being valid for a predetermined part of said session.

In a further variant the method may comprise at least one of the steps of: receiving a data request from the client, said data request comprising a session key; decrypting the private key stored in the memory using the session key; and/or decrypting the scrambling key stored in the personal data storage unit using the private key.

In yet a further variant the personal data storage unit may comprise personal data scrambled by a personal scrambling key and/or the data request may comprise data access information for identifying the data to be accessed. In one variant the method may comprise the step of descrambling at least part of the data identified in the data access information and stored in said personal data storage unit using the personal scrambling key. Hence, the invention thus greatly reduces the risk of unauthorized disclosure of large parts of the personal data storage units will be greatly reduced as the data of each unit is encrypted using an unique personal (symmetric) encryption key and decryption of all units require knowledge of the passwords of all subscribers. If a hacker succeeds in compromising one personal data storage unit by unauthorized access to a password, the security of the other personal data storage units is still preserved.

In one variant the method may comprise the step of transmitting the descrambled data to the client. In another variant the method may comprise the step of signing the data transmitted to the client using the private key. The invention thus allows the signing of data using the subscriber certificate which is stored centrally with the personal data storage unit and the transmission of the signed data to a relying party which requires such data for an electronic transaction. Such scheme is particular advantageous as it does not require the installation of subscriber certificates on the terminal of the subscriber, e.g. a mobile phone. The signing of the data in the transaction is centrally handled by the secure server.

In yet another variant the method may comprise at least one of the steps of: transmitting data to the secure server; scrambling the data using the personal scrambling key; and/or storing the scrambled data in said personal data storage unit.

In a further aspect the invention may relate to a secure data server for managing one or more personal data storage units connected to said secure server, wherein each data storage unit may be associated with a private key encrypted by a subscriber identify code and a personal scrambling key encrypted by a public key. The data server may comprise: a receiver for receiving a login request from a client, said request comprising a subscriber identity code associated with a personal data storage unit; a private key decryptor for decyrpting the private key from said personal data storage unit using the subscriber identity code in said login request; a generator for generating a session key; a session key encryptor for encrypting the private key using a session key; and/or a transmitter for transmitting the session key to said client.

In yet a further aspect the invention may relate to a secure data storage system, comprising a secure data server as described above. The secure data server may be connected to one or more databases, said databases comprising one or more personal data storage units, wherein the system may further comprise one or more clients for accessing said personal data storage units.

The invention may also relate to a computer program product comprising software code portions configured for, when run in the memory of a computer, preferably a secure data server, executing the method steps according to any of the method claims as described above.

The invention will be further illustrated with reference to the attached drawings, which schematically will show embodiments according to the invention. It will be understood that the invention is not in any way restricted to these specific embodiments. The invention is defined by the appended claims.

### Brief description of the drawings

**Fig. 1** depicts a schematic of a secure data storage system according to one embodiment of the invention.
**Fig. 2** depicts a schematic of the registration of a subscriber with the secure data storage system.
**Fig. 3** depicts a login for use with a secure data server according to one embodiment of the invention.
**Fig. 4** depicts a set-up procedure for use with a secure data server according to one embodiment of the invention.
**Fig. 5** depicts a schematic of a transaction using a secure data storage system according to an embodiment of the invention.
**Fig. 6** depicts a schematic of a transaction using a secure data storage system according to an another embodiment of the invention.

### Detailed description

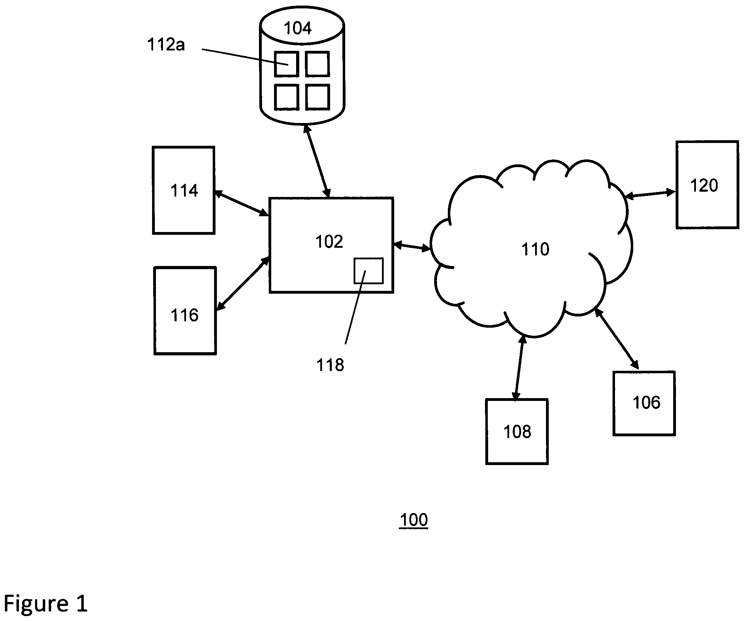

**Fig. 1** depicts a schematic of an exemplary secure data storage system **100** according to one embodiment of the invention. The system comprises a secure data server (SDS) **102** connected to one or more databases (DB) **104.** One or more terminals **106,108** of subscribers may connect to the SDS via one or more communications networks **110** such as the Internet, a local network (LAN) and/or a wide area network (WAN). A terminal may be personal computer, a PDA, a smart phone, an service provider, etc. The terminal typically comprises an Operating System (OS) comprising a kernel which manages the resources of the terminal e.g. one or more Central Processing Units (CPUs), a memory for storing program instructions and data and Input/Output (I/O) devices. Further, the OS comprises Application Programming Interfaces (APIs) through which application programs may access (wireless) Internet services. The OS of the terminal may execute client software which uses HTTP type web sessions and e.g. the secure socket layer (SSL) protocol and/or Security Assertion Mark-up Language (SAML) for providing a secure interface between the subscriber terminal and the SDS.

The SDS may be configured to centrally store and access sensitive data of a subscriber which is registered with the data storage system. Such data may for example comprise authentication data, passwords, financial, commercial and/or medical data, identity data such passport and biometric data, etc.. These data which require secure storage may be stored in the database, which for that purpose may be partitioned in personal data storage units (PDSUs) **112a-112d.** Each PDSU is under full control of the subscriber: a subscriber may access the PDSU for reading, writing and deleting data stored in the PDSU. Further, during an authorization or a transaction the subscriber may authorize a third party for accessing (i.e. disclosing) a predetermined part of the data. In order to ensure privacy and data integrity, the data in each PDSU is stored in encrypted form using an advantageous crypto scheme which will be described hereunder in more detail.

Access to a PDSU may require a strong authentication scheme, e.g. multi-factor authentication in the form of a challenge-response type scheme using a smart card and/or mobile messaging. For that purpose the SDS may be connected to one or more authentication servers **114,116,** e.g. a SMS,MMS or IVR server used in the multi-factor authentication process. For efficient and convenient handling of the authentication procedure a digital identity (ID) may be used as a username. To that end, the secure data server may comprise an identity provider **118** for associating a subscriber with a digital ID. Such digital ID may have the form of an URL, e.g. my.trust-id.com/name, as defined e.g. in the OpenID standard or in the ENUM standard. When entering a digital ID into an digital ID enabled website of a service provider **120** (the relying party) a subscriber will be redirected to the SDS for authenticating the subscriber. Once authenticated, the SDS may send the relying party a message confirming (un)successful authentication.

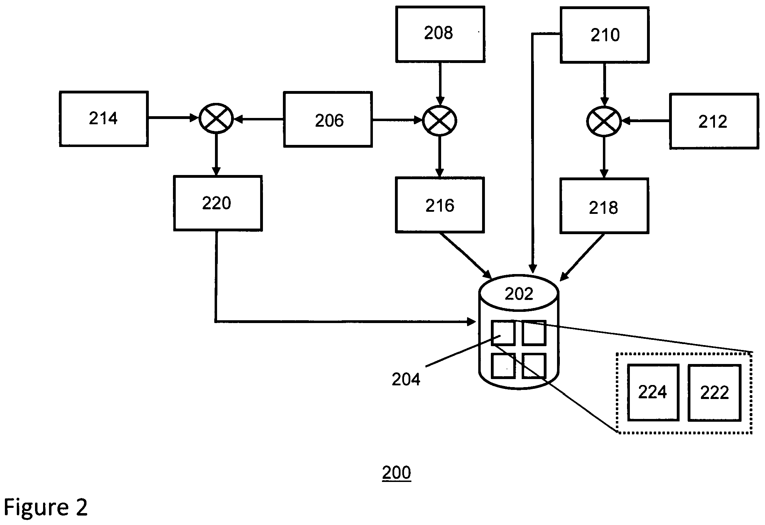

Further, the secure data storage system may be part of a hierarchical trust system, such as a public key infrastructure (PKI). For example, the SDS may be a certificate authority (CA) which is authorized (e.g. by a root CA controlled by the government) to validate the identity of subscribers and issue digital subscriber certificates for associating the identity of the subscriber (e.g. a person, an organization, a legal entity, a server, etc.) to a public key in the digital certificate. The digital certificate may further comprise a (secret) private key associated with the public key. When issuing a subscriber certificate, the certificate is not sent to the subscriber client. Instead, the subscriber certificates are centrally stored and managed by the SDS. This process will be further explained with reference to **Fig. 2****,** which depicts a schematic of an exemplary process for registering a new subscriber with the secure data storage system **100** as described with reference to **Fig. 1****.**

The registration process in **Fig. 2** may be executed via a web application, which generates a web form comprising at least a number of registration data fields (e.g. username, password, address, e-mail, telephone number, etc.). Typically the type of registration data may be determined by the information required by the secure data server to generate a subscriber certificate which may have a X.509 format. Subsequently, the submitted registration data may be sent by the client over an encrypted SSL connection to the secure data server.

Upon reception of the registration data, the SDS generates an (internal) subscriber ID (e.g. an integer associated with the user name or an hash of the username) in order to associate the subscriber with a PDSU **204** (i.e. a reserved secure memory location in the database **202**). Thereafter, the SDS or a separate key server may generate a subscriber certificate signed by the SDS comprising a public-private key pair, e.g. an RSA public-private key pair. The certificate may be valid for a certain period and/or a number of sessions. After that period or number of sessions a certificate may expire. Alternatively, before the expiry the certificate may be revoked by the CA for other reasons. The SDS may keep a revocation list of revoked and/or expired subscriber certificates for checking whether a valid subscriber certificate is used for accessing a PDSU. For password verification purposes the SDS generates a signature (e.g. a hash using an one-way function) of the private key. The private key **208** is subsequently encrypted using the password **206** provided by the subscriber upon registration.

Further, the SDS may generate a unique personal symmetric key **212,** e.g. a random number of a predetermined length, which is used for efficient encryption (scrambling) of sensitive data **222** stored by the subscriber into his PSDU. Using a symmetric key allows fast and efficient encryption of data and is not limited by the length of the key length. The personal symmetric key is encrypted with the public key and subsequently stored with the subscriber ID, the encrypted private key, the signature of the private key and the public key **210** as personal security information in a personal security information table **224** associated with PDSU **204.** The personal security information may only be unlocked by the password of the subscriber which is not stored in the database.

Losing a password results in a situation that data in the PDSU is blocked from decryption and renders the contents of the storage unit useless. Hence, the system may generate a personal unblocking code **214** (PUC) which is used to encrypt the password. The SDS may store the encrypted password **220** as personal security information in the PDSU. The PUC code may be used by the subscriber to retrieve the password and may be securely stored with a trusted third party, e.g. a notary.

Registration of a subscriber thus causes the assignment of a PDSU to the subscriber. A subscriber ID associates personal security information which may comprise a password encrypted private key **216,** a signature of the private key, a public key encrypted symmetric key **218** and a PUC code encrypted password **220** to the PSDU. Hence, the personal security information for authentication and data exchange purposes is centrally and securely stored in the database using e.g. a relational database for efficient access and retrieval, and may only be unlocked by the user password.

In further variants, the encrypted keys may stored in a distributed way in the secure data storage system, e.g. in a key database which is physically separated from the database comprising the encrypted sensitive data stored in a personal storage unit. After registration the secure data sever may inform the subscriber of the creation of the subscriber account, e.g. in the form of an activation code.

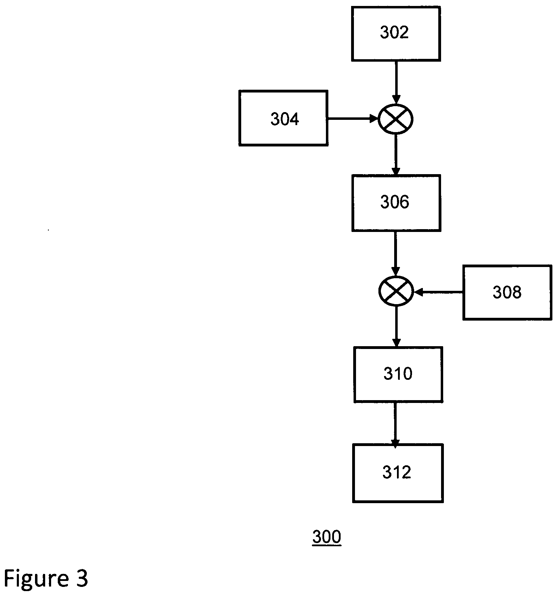

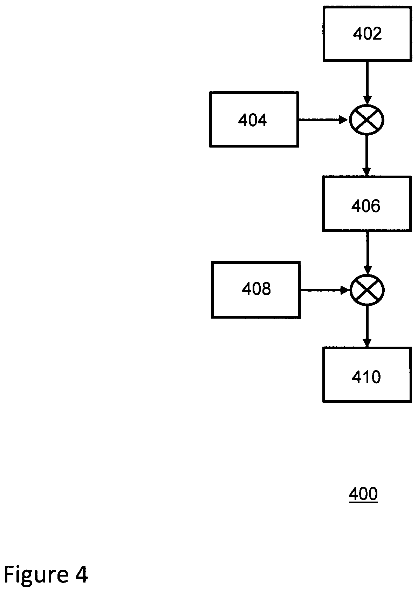

**Fig. 3** and **4** depict schematics of a login procedure **300** and a subsequent set-up procedure using a secure data storage system as described with reference to **Fig. 1** and **2****.** Typically a login procedure **300** as depicted in **Fig. 3** may be started by a subscriber accessing the SDS using a secure web session, e.g. a SSL secured HTTP session using a web browser. Alternatively, access may be achieved using other secure techniques e.g. using a Virtual Private Network (VPN).

Upon initiation of the web session, a session identifier is generated, which provides a reference to session information which is stored as a session object in a secure memory location of the SDS. Session information may comprise the subscriber ID and session state information which is exchanged between the client (the web browser) and the server by sending cookies back and forth between the client and the server.

The SDS may require the subscriber to enter a user name (e.g. in the form of a digital ID) and a password into a login window. By associating the login name of the subscriber to a subscriber ID, the secure data server may retrieve the password-encrypted private key **302** from the PDSU associated with the subscriber ID. Thereafter the SDS uses the password **304** provided by the subscriber to decrypt the encrypted private key **306.** Verification of the thus decrypted password may be realized by comparing the hash of the password and the hash of the password stored in the database during the registration process. If the hash values differ, the login procedure is terminated.

If the verification is successful (i.e. the hash values are identical) the login procedure may be continued by generating a session key **308 .** The session key is an encryption key which may be valid for a predetermined period during the session and which may be used for encrypting the private key, which was decrypted during the login session. Thereafter, the log in procedure may be completed by storing the encrypted private key **310** as session information in the session object and by sending the session key in a cookie to the client **312.** After login of the subscriber, the session object only contains an encrypted private key, which may only be decrypted by the client associated with the session. As a security measure, the session key may be regularly changed. In one embodiment, the session key is refreshed by generating a new session key. The generation of a new session key may require repetition of steps **306-312** of the login procedure.

If the subscriber decides to access data in the PDSU or to authorize disclosure of a predetermined part of the data to a third party, a set-up procedure **400** as described in **Fig. 4** may be started by sending an HTTP request comprising a cookie with the session ID and the session key **402** to the SDS. Using the session ID, the SDS retrieves the encrypted private key **404** from the session information stored in the session object and decrypts the private key **406.** In one embodiment, before decrypting the personal symmetric key, the SDS may check the validity of the user certificate by checking whether the user certificate is listed in the revocation list.

Thereafter, using the subscriber ID in the session object, the encrypted personal symmetric key **408** is retrieved from PDSU and decrypted using the private key. The SDS may use the symmetric key **410** to encrypt sensitive data to be stored in the PDSU and to decrypt sensitive data for disclosure to the subscriber and/or third parties authorized by the subscriber. After, termination of the session, the PDSU comprises encrypted sensitive data and associated personal security information encrypted key information which is required to decrypt the data and which may only be accessed by the subscriber using his password.

Hence, the SDS according to the invention allows the storage of data in a PDSU which may only be accessed by the subscriber or a third party authorized by the subscriber. Access is managed by the SDS using a subscriber certificate which is securely stored in the PDSU. By centrally storing and managing the subscriber certificates no complex certificate distribution scheme is required. After authentication of the subscriber the secure data server unlocks the certificate for data access and/or transaction purposes. Such scheme is particular advantageous for terminals with limited capacities, e.g. mobile phone or thin client type terminals.

Further, each PDSU may only be accessed using the associated subscriber certificate which may be unlocked using the password of the subscriber. Hence, unlike a conventional central data storage system, the administrator of the SDS has no access to the data in the personal data storage units. Hence, no complex data privacy rules are required to ensure data privacy. Any request for access (i.e. data disclosure) is routed to the subscriber who may or may not authorized the requesting party access (read only) to the data requested. Further, the risk of unauthorized disclosure of large parts of the PDSUs will be greatly reduced as the data of each PDSU is encrypted using an unique personal (symmetric) encryption key and decryption all PDSUs require knowledge of the passwords of all subscribers. If a hacker succeeds in compromising one personal data storage unit by unauthorized access to a password, the security of the other personal data storage units is still preserved.

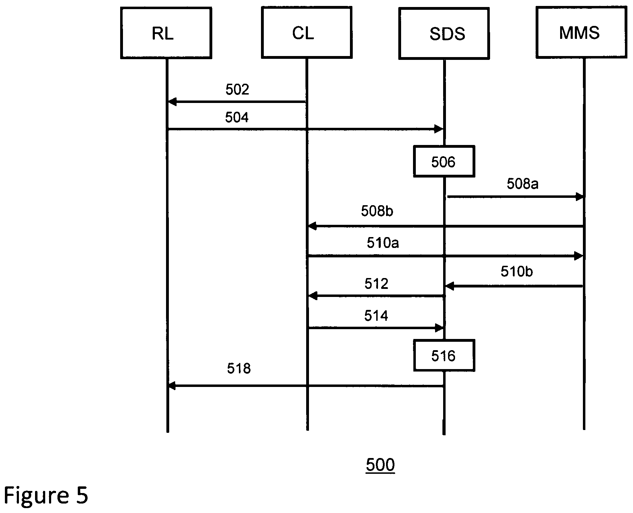

The advantages of the present invention will be become more apparent with reference to **Fig. 5****,** which illustrates a flow diagram **500** of a transaction process using the invention as described with reference to **Fig. 1-4** according to one embodiment of the invention. The depicted transaction process **500** may be part of a larger transaction process (e.g. a commercial or legal transaction) between a first and a second party wherein at least one of the parties require exchange of personal and/or other sensitive information before the transaction can be closed. The transaction process may comprise an authentication phase, an authorization phase and - if a party is successfully authenticated and authorized - a disclosure phase in which the requested data (e.g. a copy of a passport and a copy of a university degree) may be accessed (disclosed) and/or transmitted to the other party in a transaction process.

The transaction process depicted in **Fig. 5** may be executed between a first party, a consumer, and a second party, a service provider. The consumer may electronically access the services via a website of the service provider using client software (CL), e.g. a web browser, executed on a terminal. In order to complete a transaction, the service provider, the relying party (RL), may require authentication of the consumer, including e.g. proof that the consumer is Dutch and at least 18 years of age, using a strong authentication scheme.

To that end, the relying party uses a third party authentication service, preferably a governmentally authorized third party authentication service, using a secure data storage system as described with reference to **Fig. 1-4****.** For the purpose of the description below it is assumed that the consumer is already registered with the secure data storage system, thus having a PDSU which may be used for the authentication process with the service provider.

The consumer may send a request for a transaction **502** to the service provider by accessing a website of the service provider. Access to the website may require a login procedure which requires the input of transaction data, including an username and a password, into a web form. The digital identity may be an ENUM or OpenID-type identifier, e.g. URL my.trust-id.com/name, which may be provided by the secure data storage system to the subscriber at registration. After transmitting the entered data in a request to the service provider, the service provider may transmit a request for authentication **504,** comprising at least the username, the password of the consumer and the transaction information, over a secure SSL web session to the SDS of the third party authentication service. The transaction information may comprise a reference to the personal data which the service provider wants to access for authentication purposes (e.g. a reference to an electronic copy of the relevant parts of the passport of the consumer, stored in the PDSU indicating that the consumer is Dutch and at least 18 years of age).

Having received the authentication request, the SDS may then proceed with the login procedure **506** as described in relation with **Fig. 3****.** This login procedure may include the steps of associating of the username via an (internal) subscriber ID to the PDSU of the costumer and verifying the password by decrypting the encrypted private key stored in the PDSU using the password. In the example of **Fig. 5****,** the SDS may initiate a further challenge-response authentication step using an out-of-band communication channel. The SDS may for example transmit a challenge **508a,** e.g. a textual and/or visual challenges such as Captcha, via a SMS/MMS platform to the mobile phone of the subscriber **508b.** In other embodiments, other authentication schemes may be employed, e.g. the use of a tamper-free hardware token or a smart card may be used for providing strong and secure authentication.

After successful response **510a,510b** to the challenge, the SDS may send a request for data **512** to the client. Such request may be implemented as a web form requesting the customer to approve read-only access to the relevant parts of his personal data, i.e. a copy of his passport, stored in his PDSU. After approval **514,** the SDS may set-up a secure SSL link with the relying party RL using the step-up procedure similar to the scheme described with reference to **Fig. 4****.** During the set-up procedure **516,** the private key stored in the PDSU is decrypted using the session key in the session object of the web session between the client and the SDS. Using the private key the personal symmetric key is obtained for decrypting the requested data. These data are subsequently sent to the relying party **518** for authentication purposes. In one embodiment, the requested data are signed by the SDS using the private key. In that case, the public key for verifying the signature may be provided by the SDS sending a digital certificate to the service provider. The invention thus allows the signing of data using the subscriber certificate which is stored centrally with the personal data storage unit and the transmission of the signed data to a relying party which requires such data for an electronic transaction. Such scheme is particular advantageous as it does not require the installation of subscriber certificates on the terminal of the subscriber, e.g. a mobile phone. The signing of the data in the transaction is centrally handled by the secure server.

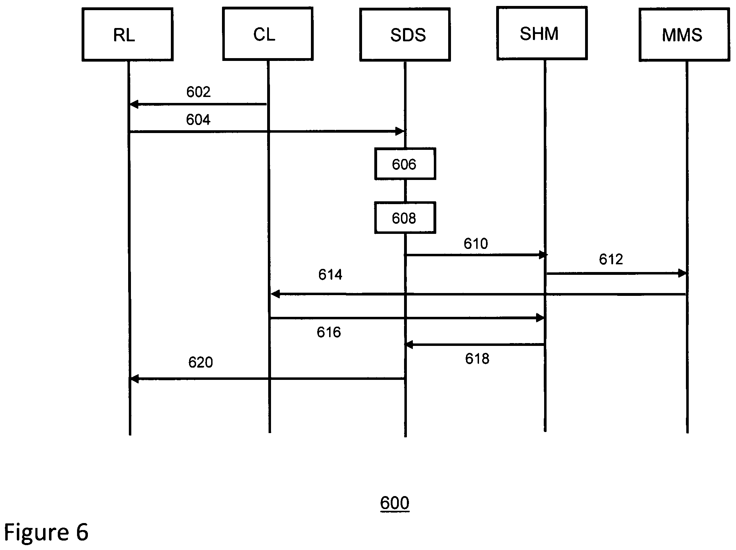

**Fig. 6** depicts flow diagram **600** of a transaction process using the invention as described with reference to **Fig. 1-4** according to another embodiment of the invention. In particular, in this embodiment a separate hardware security module (HSM) is used during the authentication procedure. The HSM relates to a tamper-resistant hardware device, which cannot be opened without complete destruction of the data stored therein. The HSM may comprise one or more secret keys stored in a secure memory of the HSM. Using the secret keys it may receive encrypted data, decrypt the data using one of the secret keys and execute an process on the basis of the content of the decrypted data.

In particular, the HSM is configured to receive a Secure Signature Creation Device (SSCD) message from the SDS comprising authentication information, e.g. at least the MSISDN (the mobile number of a user) and the private authentication key associated with the user in encrypted form. Encryption of the content of the SSCD message may be realized using the personal symmetric key associated with the user.

Hence, the PDSU associated with the user may comprise a SSCD message wherein the MSISDN and the private authentication key are encrypted using a secret key which is only available in the secure hardware of the HSM. In particular, during the registration of a user to the SDS as described with reference to **Fig. 2****,** a SSCD message comprising at least the MSISDN (the mobile number of a user) and the private authentication key associated with the user may be assigned to the user and encrypted using the personal symmetric key.

As will be apparent hereunder, during the transaction process, in particular after the login process and the subsequent set-up procedure in which the personal symmetric key is retrieved in a secure, the HSM may provide a secure authentication process wherein the user may be provided with a private authentication key for signing the data handled during the transaction.

The transaction process may start in a similar way as the process described with reference to **Fig. 5****.** The consumer may send a request for a transaction **602** to the service provider by accessing a website of the service provider, where after the service provider may transmit a request for authentication **604,** comprising at least the username, the password of the consumer and the transaction information, over a secure SSL web session to the SDS of the third party authentication service.

Thereafter, the SDS may execute the login procedure **606** and a subsequent set-up procedure **608** as described in detail with reference to **Fig. 3** and **4** respectively. After execution of the set-up procedure the SDS first initiates an authentication procedure on the basis of the decrypted personal symmetric key as retrieved via the set-up procedure. The SDS may retrieve the encrypted SSCD message, decrypt it using the personal symmetric key and send the SSCD message in an authentication request to the HSM. In one embodiment, the authentication message may comprise further data associated with the transaction process to the HSM, e.g. a hash of a pfd of a document used during the transaction (step **610**).

The SHM decrypts the content of the SSCD message and initiates a challenge-response process on the basis of the MSISDN in the SSCD (step **612**). The challenge may be sent via the mobile platform MMS to the client (step **614**). The user may respond to the challenge and send the response back to the HSM (step **616**). If the HSM has established that the challenge-response procedure is successfully executed, the HSM may sign a hash value associated with the transaction documents using the private authentication key. Thereafter HSM may instruct the SDS (step **618**) to set-up a secure data line between the SDS and the sent to the relying party (step **620**). Hence, this way, at least part of the authentication procedure and the process of digitally signing transaction documents may be executed in the secure environment of the HSM.

It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed. The scope of the invention is defined by the accompanying claims.

## Claims

1. Method for managing one or more personal data storage units for securely and centrally storing sensitive data, each of said personal data units being connected to a secure data server and being associated with a private key, the corresponding public key, and a personal scrambling key used for encrypting and decrypting data in said personal data unit, wherein said personal scrambling key is encrypted with said public key and said private key is encrypted with a subscriber identity code, the method comprising the steps of:
upon establishing a session between a client and said secure data server, generating a session ID identifying said session, said session ID providing a reference to session information stored as a session object in a secure memory location of said secure data server;
receiving an access request from a client, said request comprising a subscriber identity code associated with a personal data storage unit;
authenticating said client by using the subscriber identity code contained in said access request to decrypt the encrypted private key stored in said personal data storage unit; generating a session key for encrypting said private key, said session key being valid for a predetermined part of said session;
storing the private key encrypted with said session key as session information in said session object; and,
transmitting the session key and said session ID to said client.

2. Method according to claim 1, wherein said authentication further comprises the steps of:
comparing a hash from the private key associated with said personal data unit with the hash of the private key decrypted with the subscriber identify code contained in said access request.

3. Method according to claims 1 or 2, wherein said authentication further comprises the steps of:
sending a challenge, preferably in an out-of-band channel, two the subscriber of the personal data storage unit;
receiving a response from the subscriber;
comparing said response with an expected response stored in the secure data server.

4. Method according to any of claims 1-3, wherein the private key and public key are associated with a subscriber certificate, preferably said certificate having a limited lifetime, said lifetime being determined by a predetermined duration of time or a predetermined number of sessions.

5. Method according to claim 4, wherein the secure sever comprises a revocation list of revoked subscriber certificates, said authentication further comprises the step of:
checking whether the subscriber certificate associated with the subscriber identity code is listed on the revocation list.

6. Method according to any of claims 1-5, the method further comprises the step of:
receiving a transaction request from the client, said transaction request comprising a session key;
decrypting the private key stored in the memory using the session key;
decrypting the scrambling key stored in the personal data storage unit using the private key.

7. Method according to claim 6, wherein said personal data storage unit comprises data scrambled by said personal scrambling key and wherein said transaction request comprises data access information for identifying the data to be accessed, the method further comprises the step of:
descrambling at least part of the data identified in the data access information and stored in said personal data storage unit using the personal scrambling key.

8. Method according to claim 7, the method further comprising the step of transmitting the descrambled data to the client.

9. Method according to claim 8, the method further comprising the step of signing the data transmitter to the client using the private key.

10. Method according to claim 6, the method further comprises the step of:
retrieving an encrypted SSCD message from said personal data storage unit, preferably said SSCD message comprising an MSISDN and/or a private authentication key;
decrypting said encrypted SSCD message using the scrambling key;
sending said SSCD message in an authentication request to a secure hardware module;
the secure hardware module executing an authentication procedure on the basis of the information in said authentication request.

11. Method according to claim 10, the method further comprises the step of:
the secure hardware module signing transaction data using the private authentication key in said SSCD message.

12. A secure data server for managing one or more personal data storage units connected to said secure server, each data storage unit being associated with a private key, the corresponding public key, and a personal scrambling key used for encrypting and decrypting data in said personal data unit, wherein said personal scrambling key is encrypted with said public key and said private key is encrypted with a subscriber identity code, data server being configured to carry out the method steps according to claim 1.

13. A secure data storage system, comprising a secure data server according to claim 12, said secure data server being connected with one or more databases, said databases comprising one or more personal data storage units, the system further comprising one or more clients for accessing said personal data storage units.

14. A computer program product comprising software code portions configured for, when run in the memory of a computer, preferably a secure data server according to claim 12, executing the method steps according to any of claims 1-11.

## Patentansprüche

1. Verfahren zum Verwalten von einer oder mehreren Speichereinheiten für persönliche Daten zum sicheren und zentralen Speichern von sensiblen Daten, wobei jede Einheit für persönliche Daten mit einem sicheren Datenserver verbunden ist und ihr ein privater Schlüssel, der entsprechende öffentliche Schlüssel und ein persönlicher Verwürfelungsschlüssel zugeordnet ist, verwendet zum Verschlüsseln und Entschlüsseln von Daten in der Einheit für persönliche Daten, wobei der persönliche Verwürfelungsschlüssel mit dem öffentlichen Schlüssel verschlüsselt ist und der private Schlüssel mit einem Teilnehmeridentitätscode verschlüsselt ist, das Verfahren mit den Schritten:
beim Etablieren einer Sitzung zwischen einem Endgerät und dem sicheren Datenserver, Erzeugen einer Sitzungs-ID, die die Sitzung identifiziert, wobei die Sitzungs-ID eine Referenz auf Sitzungsinformation bereitstellt, die als ein Sitzungsobjekt an einem sicheren Speicherort des sicheren Datenservers gespeichert ist;
Empfangen einer Zugriffsanfrage von einem Endgerät, wobei die Anfrage einen Teil Teilnehmeridentitätscode aufweist, der einer Speichereinheit für persönliche Daten zugeordnet ist;
Authentifizieren des Endgeräts, indem der in der Zugriffsanfrage enthaltende Teilnehmeridentitätscode verwendet wird, um den verschlüsselten privaten Schlüssel zu entschlüsseln, der in der Speichereinheit für persönliche Daten gespeichert ist;
Erzeugen eines Sitzungsschlüssels zum Verschlüsseln des privaten Schlüssels, wobei der Sitzungsschlüssel für einen vorbestimmten Teil der Sitzung gültig ist;
Speichern des privaten Schlüssels verschlüsselt mit dem Sitzungsschlüssel als Sitzungsinformation in dem Sitzungsobjekt; und,
Übertragen des Sitzungsschlüssels und der Sitzungs-ID an das Endgerät.

2. Verfahren nach Anspruch 1, wobei die Authentifizierung ferner die Schritte aufweist:
Vergleichen eines Hash von dem privaten Schlüssel, der der Dateneinheit für persönliche Daten zugeordnet ist, mit dem Hash des privaten Schlüssels entschlüsselt mit dem Teilnehmeridentitätscode, der in der Zugriffsanfrage enthalten ist.

3. Verfahren nach Anspruch 1 oder 2, wobei die Authentifizierung ferner die Schritte aufweist:
Senden einer Herausforderung, bevorzugt in einem Außerbandkanal, an den Teilnehmer der Speichereinheit für persönliche Daten;
Empfangen einer Antwort von dem Teilnehmer;
Vergleichen der Antwort mit einer erwarteten Antwort, die in dem sicheren Datenserver gespeichert ist.

4. Verfahren nach einem der Ansprüche 1 - 3, wobei der private Schlüssel und der öffentliche Schlüssel einem Teilnehmerzertifikat zugeordnet sind, bevorzugt einem Zertifikat mit einer begrenzten Lebensdauer, wobei die Lebensdauer durch eine vorbestimmte Zeitdauer oder eine vorbestimmte Anzahl von Sitzungen bestimmt ist.

5. Verfahren nach Anspruch 4, wobei der sichere Server eine Widerrufsliste von widerrufenen Teilnehmerzertifikaten aufweist und die Authentifizierung ferner den Schritt aufweist:
Prüfen, ob das dem Teilnehmeridentitätscode zugeordnete Zertifikat in der Widerrufsliste enthalten ist.

6. Verfahren nach einem der Ansprüche 1- 5, das Verfahren ferner mit dem Schritt:
Empfangen einer Transaktionsanfrage von dem Endgerät, wobei die Transaktionsanfrage einen Sitzungsschlüssel aufweist;
Entschlüsseln des privaten Schlüssels, der in dem Speicher gespeichert ist, unter Verwendung des Sitzungsschlüssels;
Entschlüsseln des Verwürfelungsschlüssels, der in der Speichereinheit für persönliche Daten gespeichert ist, unter Verwendung des privaten Schlüssels.

7. Verfahren nach Anspruch 6, wobei die Speichereinheit für persönliche Daten Daten aufweist, die mittels des persönlichen Verwürfelungsschlüssels verwürfelt wurden, und wobei die Transaktionsanfrage Datenzugriffsinformation aufweist zum Identifizieren der Daten, auf die zugegriffen werden soll, das Verfahren ferner mit dem Schritt:
Entwürfeln von zumindest einem Teil der Daten, die in der Datenzugriffsinformation identifiziert sind und in der Speichereinheit für persönliche Daten unter Verwendung des persönlichen Verwürfelungsschlüssels gespeichert sind.

8. Verfahren nach Anspruch 7, das Verfahren ferner mit dem Schritt eines Übertragens der entwürfelten Daten an das Endgerät.

9. Verfahren nach Anspruch 8, das Verfahren ferner mit dem Schritt eines Signierens der an das Endgerät übertragenen Daten mittels des privaten Schlüssels.

10. Verfahren nach Anspruch 6, das Verfahren ferner mit dem Schritt:
Abholen einer verschlüsselten SSCD-Nachricht aus der Speichereinheit für persönliche Daten, wobei die SSCD-Nachricht bevorzugt eine MSISDN und/oder einen privaten Authentifizierungsschlüssel aufweist;
Entschlüsseln der verschlüsselten SSCD-Nachricht unter Verwendung des Verwürfelungsschlüssels;
Senden der SSCD-Nachricht in einer Authentifizierungsanfrage an ein sicheres Hardwaremodul;
wobei das sichere Hardwaremodul eine Authentifizierungsprozedur auf der Basis der Information in der Authentifizierungsanfrage ausführt.

11. Verfahren nach Anspruch 10, das Verfahren ferner mit dem Schritt:
das sichere Hardwaremodul signiert Transaktionsdaten unter Verwendung des privaten Authentifizierungsschlüssels in der SSCD-Nachricht.

12. Ein sicherer Datenserver zum Verwalten von einer oder mehreren Speichereinheiten für persönliche Daten, die mit dem sicheren Server verbunden sind, wobei jeder Speichereinheit für Daten ein privater Schlüssel, der entsprechende öffentliche Schlüssel und ein persönlicher Verwürfelungsschlüssel zugeordnet ist, verwendet zum Verschlüsseln und Entschlüsseln von Daten in der Einheit für persönliche Daten, wobei der persönliche Verwürfelungsschlüssel mit dem öffentlichen Schlüssel verschlüsselt ist und der private Schlüssel mit einem Teilnehmeridentitätscode verschlüsselt ist,
wobei der Datenserver dafür ausgebildet ist, das Verfahren nach Anspruch 1 auszuführen.

13. Ein sicheres Datenspeichersystem mit einem sicheren Datenserver nach Anspruch 12, wobei der sichere Datenserver mit einer oder mehreren Datenbanken verbunden ist, wobei die Datenbanken eine oder mehrere Speichereinheiten für persönliche Daten aufweisen, wobei das System ferner ein oder mehrere Endgeräte zum Zugreifen auf die Speichereinheiten für persönliche Daten aufweist.

14. Computerprogrammprodukt mit Softwarecodeabschnitten, die dafür ausgebildet sind, wenn sie in dem Speicher eines Computer laufen, bevorzugt einem sicheren Datenserver nach Anspruch 12, die Verfahrensschritte nach einem der Ansprüche 1 - 11 auszuführen.

## Revendications

1. Procédé de gestion d'une ou de plusieurs unités de stockage de données personnelles pour stocker de façon sécurisée et centrale des données sensibles, chacune desdites unités de données personnelles étant connectée à un serveur de données sécurisé et associée à une clé privée, la clé publique correspondante et une clé d'embrouillage personnelle utilisées pour chiffrer et déchiffrer des données dans ladite unité de données personnelles, dans lequel ladite clé d'embrouillage personnelle est chiffrée avec ladite clé publique et ladite clé privée est chiffrée avec un code d'identité d'abonné, le procédé comprenant les étapes de :
lors de l'établissement d'une session entre un client et ledit serveur de données sécurisé, génération d'un identifiant de session identifiant ladite session, ledit identifiant de session fournissant une référence à des informations de session stockées en tant qu'objet de session dans un emplacement mémoire sécurisé dudit serveur de données sécurisé ;
réception d'une demande d'accès en provenance d'un client, ladite demande comprenant un code d'identité d'abonné associé à une unité de stockage de données personnelles ;
authentification dudit client en utilisant le code d'identité d'abonné contenu dans ladite demande d'accès pour déchiffrer la clé privée chiffrée stockée dans ladite unité de stockage de données personnelles ;
génération d'une clé de session pour chiffrer ladite clé privée, ladite clé de session étant valide pendant une partie prédéterminée de ladite session ;
stockage de la clé privée chiffrée avec ladite clé de session en tant qu'informations de session dans ledit objet de session ; et,
transmission de la clé de session et dudit identifiant de session audit client.

2. Procédé selon la revendication 1, dans lequel ladite authentification comprend en outre les étapes de :
comparaison d'un condensé numérique de la clé privée associée à ladite unité de données personnelles avec le condensé numérique de la clé privée déchiffrée avec le code d'identité d'abonné contenu dans ladite demande d'accès.

3. Procédé selon les revendications 1 ou 2, dans lequel ladite authentification comprend en outre les étapes de :
envoi d'une interrogation, de préférence dans un canal hors bande, à l'abonné de l'unité de stockage de données personnelles ;
réception d'une réponse en provenance de l'abonné ;
comparaison de ladite réponse avec une réponse attendue stockée dans le serveur de données sécurisé.

4. Procédé selon l'une quelconque des revendications 1 à 3, dans lequel la clé privée et la clé publique sont associées à un certificat d'abonné, de préférence ledit certificat ayant une durée de vie limitée, ladite durée de vie étant déterminée par une durée prédéterminée ou un nombre de sessions prédéterminé.

5. Procédé selon la revendication 4, dans lequel le serveur sécurisé comprend une liste de révocation de certificats d'abonné révoqués, ladite authentification comprend en outre l'étape de :
vérification si le certificat d'abonné associé au code d'identité d'abonné est listé dans la liste de révocation.

6. Procédé selon l'une quelconque des revendications 1 à 5, le procédé comprend en outre les étapes de :
réception d'une demande de transaction en provenance du client, ladite demande de transaction comprenant une clé de session ;
déchiffrement de la clé privée stockée dans la mémoire à l'aide de la clé de session ;
déchiffrement de la clé d'embrouillage stockée dans l'unité de stockage de données personnelles à l'aide de la clé privée.

7. Procédé selon la revendication 6, dans lequel ladite unité de stockage de données personnelles comprend des données embrouillées par ladite clé d'embrouillage personnelle et dans lequel ladite demande de transaction comprend des informations d'accès aux données pour identifier les données auxquelles on doit accéder, le procédé comprend en outre l'étape de :
désembrouillage d'au moins une partie des données identifiées dans les informations d'accès aux données et stockées dans ladite unité de stockage de données personnelles à l'aide de la clé d'embrouillage personnelle.

8. Procédé selon la revendication 7, le procédé comprenant en outre l'étape de transmission des données désembrouillées au client.

9. Procédé selon la revendication 8, le procédé comprenant en outre l'étape de signature des données transmises au client à l'aide de la clé privée.

10. Procédé selon la revendication 6, le procédé comprend en outre les étapes de :
récupération d'un message SSCD chiffré dans ladite unité de stockage de données personnelles, de préférence ledit message SSCD comprenant une clé d'authentification privée et/ou MSISDN ;
déchiffrement dudit message SSCD chiffré à l'aide de la clé d'embrouillage ;
envoi dudit message SSCD dans une demande d'authentification à un module matériel sécurisé ;
le module matériel sécurisé exécutant une procédure d'authentification sur la base des informations dans ladite demande d'authentification.

11. Procédé selon la revendication 10, le procédé comprend en outre l'étape de :
signature par le module matériel sécurisé de données de transaction à l'aide de la clé d'authentification privée dans ledit message SSCD.

12. Serveur de données sécurisé pour gérer une ou plusieurs unités de stockage de données personnelles connectées audit serveur sécurisé, chaque unité de stockage de données étant associée à une clé privée, la clé publique correspondante et une clé d'embrouillage personnelle utilisées pour chiffrer et déchiffrer des données dans ladite unité de données personnelles, dans lequel ladite clé d'embrouillage personnelle est chiffrée avec ladite clé publique et ladite clé privée est chiffrée avec un code d'identité d'abonné,
le serveur de données étant configuré pour réaliser les étapes de procédé selon la revendication 1.

13. Système de stockage de données sécurisé, comprenant un serveur de données sécurisé selon la revendication 12, ledit serveur de données sécurisé étant connecté à une ou plusieurs bases de données, lesdites bases de données comprenant une ou plusieurs unités de stockage de données personnelles, le système comprenant en outre un ou plusieurs clients pour accéder auxdites unités de stockage de données personnelles.

14. Produit-programme d'ordinateur comprenant des portions de code logiciel configurées, lorsqu'elles sont exécutées dans la mémoire d'un ordinateur, de préférence un serveur de données sécurisé selon la revendication 12, pour exécuter les étapes de procédé selon l'une quelconque des revendications 1 à 11.
